# EUROPÄISCHE PATENTSCHRIFT

(11) **EP 1 870 265 B1**
(45) Veröffentlichungstag und Bekanntmachung des Hinweises auf die Patenterteilung: **16.05.2012**
(21) Anmeldenummer: 07108342.2
(22) Anmeldetag: 16.05.2007
(51) Int. Cl.: B60G 15/06, F16C 19/10, F16C 33/76

(54) **Federbeinlager**
Spring strut bearing
Dispositif de ressort

(30) Priorität: 16.06.2006 DE 102006027806
(43) Veröffentlichungstag der Anmeldung: 26.12.2007
(73) Patentinhaber: Schaeffler Technologies AG & Co. KG, 91074 Herzogenaurach (DE)
(72) Erfinder: Schricker, Carsten, 97762 Westheim (DE); Lutz, Rainer, 91459 Markt Erlbach (DE)

(56) Entgegenhaltungen:
- EP-A- 1 172 238
- EP-A- 1 607 645
- WO-A-2006/133909
- WO-A-2007/085323
- DE-A1- 19 921 695
- DE-U1-202004 011 432
- FR-A1- 2 429 926
- GB-A- 1 397 965
- JP-A- 8 326 758
- JP-A- 11 013 767
- JP-A- 2001 027 227
- US-A- 3 844 631
- US-A- 4 175 770
- US-A- 4 325 566
- US-A- 4 486 028
- US-A- 4 699 530
- US-A1- 2002 009 250

## Beschreibung

### Gebiet der Erfindung

Die Erfindung betrifft ein Federbeinlager, mit einem Axialgleitlager oder einem Axialwälzlager, das zwischen einem Gehäuseunterteil und einem Gehäuseoberteil eines Lagergehäuses aufgenommen ist und wenigstens einem eine Trennfuge zwischen dem Gehäuseunterteil und dem Gehäuseoberteil abdichtenden Dichtungselement.

### Hintergrund der Erfindung

Federbeine für Kraftfahrzeuge umfassen einen Teleskopstoßdämpfer und eine Schraubenfeder mit großem Durchmesser, die sich in tellerförmigen Auflagen gegenüber dem Stoßdämpfer und der Karosserie des Fahrzeugs abstützt. Beim Lenken des Fahrzeugs schwenkt das Federbein um die Kolbenstange des Stoßdämpfers. Um den Widerstand beim Lenken zu reduzieren, ist im Bereich der Auflage der Schraubenfeder ein Axialgleitlager oder ein Axialwälzlager angeordnet, die Lager nehmen vorwiegend axiale Gewichtskräfte und Stoßbelastungen auf.

Aus der DE 100 42 677 A1 ist ein Federbeinlager bekannt, bei dem ein Axialwälzlager zwischen einem Gehäuseoberteil und einem Gehäuseunterteil aufgenommen ist, die miteinander durch eine Schnappverbindung verbunden sind. Um das Eindringen von Schmutz und das Austreten eines Schmiermittels zu verhindern, ist eine Labyrinthdichtung vorgesehen.

Eine Federbeinlagerung ist aus der DE 199 60 699 A1 bekannt, wobei auch dort eine durch ein Gehäuseunterteil und ein Gehäuseoberteil gebildete Labyrinthdichtung das Wälzlager schützt.

Eine vergleichsweise kompliziert aufgebaute Federbeinlagerung wird in der EP 0 899 182 B1 vorgeschlagen, dort ist an der unteren Lagerstelle eine Gummilippendichtung und eine zusätzliche Labyrinthdichtung vorgesehen, außenseitig wird die untere Lagerstelle zusätzlich durch eine Schiebemuffe abgedichtet. Die Schiebemuffe wird verwendet, um bei der Montage des Achsschenkels einen toleranzbedingten Spalt durch eine Passscheibe ausgleichen zu können. Diese Anordnung weist allerdings einen komplizierten Aufbau auf und ist daher teuer.

DE 199 21 695 A1 *zeigt ein Federbeinlager, mit einem Axialwälzlager, das zwischen einem oberen und unterem Lagerring aufgenommen ist. Eine axiale Trennfuge den Lagerringen ist mit einem Dichtungselement aus Blech abgedichtet, das an dem oberen Lagerring befestigt ist und eine Dichtung aus Elastomer aufweist. Eine ähnliche Anordnung ist in* US4,325,566A *beschrieben. An diesem Federbeinlager ist eine Dichtung aus Elastomer jedoch direkt mit dem oberen Lagering verbunden. Derartige Dichtelemente sind relativ teuer, da diese Verbundteile aus Blech und Elastomeren sind bei deren Herstellung aufwendig die elastischen Dichtungen aus Elastomer an die Bauteile aus Blech angespritzt werden. Außerdem verschleißen diese unter ungünstigen Bedingungen schnell.*

*Eine ähnliche Problematik liegt Federbeinlagern, wie diese in* US2002/0009250A1 *gezeigt sind, zugrunde. In diesem Fall sind aufwändig auch Verbundteile, jedoch aus zwei unterschiedlichen Kunststoffen oder aus einem harten Kunststoff und einem Elastomer herzustellen.*

JP -A- 11-013767 *zeigt ein Federbeinlager mit einem Axialgleitlager, das zwischen einem Gehäuseunterteil und einem Gehäuseoberteil eines Lagergehäuses aufgenommen ist. ein scheibenförmiger Dichtring dichtet eine Trennfuge zwischen dem Gehäuseunterteil und dem Gehäuseobertei*/ *ab. Die als Ringspalt ausgebildete Trennfuge ist radial zwischen zwei radialen konzentrischen scheibenförmigen Vorsprüngen, einem an dem Gehäuseoberteil und einem an dem Gehäuseunterteil, ausgebildet. Der scheibenförmige Dichtring ist axial bewegbar zwischen dem Gehäuseunterteil und dem Gehäuseoberteil gehalten, in dem dieser in einer horizontalen Ebene auf den Vorsprüngen lose aufliegt und in radialer Richtung an dem Gehäuseoberteil geführt.*

*Mit dem Dichtring ist ein Eindringen von Verschmutzungen in das Innere des Lagergehäuses wirksam verhindert werden kann. Der Dichtring verhindert, dass Schmutz, Sand oder Feuchtigkeit zu einem vorzeitigen Ausfall des Federbeinlagers oder zu einem unerwünschten Anstieg des Reibmoments führen. In der Praxis kann bei herkömmlichen Federbeinlagern Schmutz durch den offenen Radkasten in den Bereich des Federbeinlagers gelangen*.

*Diese an sich gute Lösung beansprucht viel radialen Bauraum. Der Anteil des scheibenförmigen Dichtrings, der den Ringsspalt radial überbrückt, kann in Falle einer üblichen Hochdruckreinigung des Fahrzeugs einem Strahl aus Dampf oder Wasser ausgesetzt sein, der die Scheibe in axialer Richtung von ihrem Dichtsitz abhebt. Wasser kann so in das Federbeinlager eindringen und dessen Lebensdauer verkürzen.*

### Zusammenfassung der Erfindung

Der Erfindung liegt die Aufgabe zugrunde, ein Federbeinlager anzugeben, das eine verbesserte Abdichtung gegenüber Verschmutzungen aufweist, einfach aufgebaut und kostengünstig herstellbar ist.

Zur Lösung dieser Aufgabe ist bei einem Federbeinlager der eingangs genannten erfindungsgemäß vorgesehen, dass die Trennfuge am Innenumfang oder am Außenumfang des Lagergehäuses *mittels eines* Dichtrings abgedichtet ist, der *axial* zwischen in axialer Richtung gegenüberliegenden *Vorsprüngen des Gehäuseoberteils und des Gehäuseunterteils* beweglich angeordnet ist. *Durch die Vorsprünge wird eine Führung für den Dichtring gebildet, ohne dass die beim Betrieb auftretenden Drehbewegungen zwischen den Gehäuseunterteil und dem Gehäuseoberteil dadurch beeinträchtigt werden.*

Im Fall *der* Reinigung des Fahrzeugs mit einem Hochdruckwasserstrahl verhindert der Dichtring, der axial bewegbar zwischen dem Gehäuseunterteil und dem Gehäuseoberteil gehalten ist, dass Schmutz oder Feuchtigkeit zum Axialgleitlager oder Axialwälzlager gelangen.

Der Dichtring des erfindungsgemäßen Federbeinlagers kann aus einem Kunststoffmaterial bestehen, alternativ sind jedoch auch andere Werkstoffe wie Metalle, Verbundwerkstoffe, Gummimaterialien oder dergleichen denkbar, mit denen die erforderliche Abdichtfunktion erzielt werden kann.

Gemäß einer besonders bevorzugten Ausgestaltung der Erfindung kann es vorgesehen sein, dass ein erster Dichtring am Außenumfang des Lagergehäuses und ein zweiter Dichtring am Innenumfang des Lagergehäuses angeordnet ist. Bei dieser Variante des Federbeinlagers wird ein Eindringen von Schmutz oder Feuchtigkeit von beiden Seiten der Trennfuge verhindert.

Bei dem erfindungsgemäßen Federbeinlager können das Gehäuseunterteil und das Gehäuseoberteil durch eine Schnappverbindung miteinander verbunden sein. Dementsprechend kann das Federbeinlager als kompaktes, einteiliges Bauteil an den Hersteller des Fahrzeugs geliefert werden, ohne dass umständliche Montage- oder Einbauarbeiten erforderlich sind. Gleichermaßen können herkömmliche Federbeinlager im Rahmen der Wartung oder Reparatur durch das erfindungsgemäße Federbeinlager ersetzt werden, da es keinen größeren Bauraum benötigt.

Um eine noch bessere Abdichtung des Axialgleitlagers oder des Axialwälzlagers zu erreichen, kann zusätzlich eine vorzugsweise durch das Gehäuseunterteil und das Gehäuseoberteil gebildete Labyrinthdichtung vorgesehen sein. Ein derart mehrfach abgedichtetes Federbeinlager kann als wartungsarme oder wartungsfreie Einheit ausgebildet sein.

### Kurze Beschreibung der Zeichnungen

Weitere Vorteile und Einzelheiten der Erfindung werden nachfolgend anhand von Ausführungsbeispielen unter Bezugnahme auf die Figuren beschrieben. Die Figuren sind schematische Darstellungen und zeigen:
- Fig. 1: ein erstes Ausführungsbeispiel der Erfindung; und
- Fig. 2: ein zweites Ausführungsbeispiel der Erfindung.

### Detaillierte Beschreibung der Zeichnungen

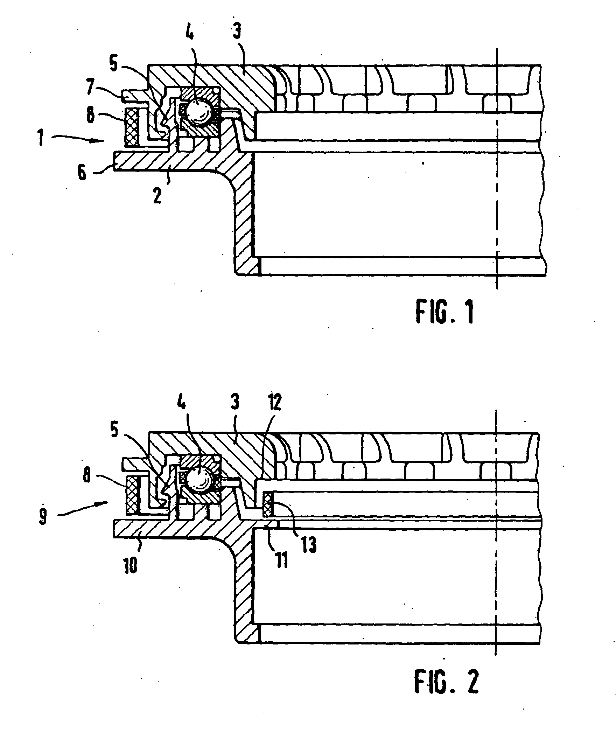

Das in Fig. 1 gezeigte Federbeinlager 1 umfasst im Wesentlichen ein Gehäuseunterteil 2 und ein Gehäuseoberteil 3, die gemeinsam ein Lagergehäuse bilden, in dessen Inneren ein Axialwälzlager 4 aufgenommen ist. Das Gehäuseunterteil 2 und das Gehäuseoberteil 3 sind über eine Schnappverbindung miteinander verbunden, beide Gehäuseteile bilden dabei eine Labyrinthdichtung 5, die das Eindringen von Schmutz, Sand oder Feuchtigkeit in das Axialwälzlager 4 verhindert.

Im Bereich der Trennfuge zwischen dem Gehäuseunterteil 2 und dem Gehäuseoberteil 3 weisen die Gehäuseteile 2, 3 jeweils einen radialen Vorsprung 6, 7 auf, ein Dichtring 8 ist zwischen den Vorsprüngen 6, 7 gehalten.

Der Dichtring 8 weist einen rechteckigen Querschnitt auf und ist zwischen den Vorsprüngen 6, 7 beweglich angeordnet. Er dient als Spritzschutz, etwa wenn das Federbein mit einem Hochdruckwasserstrahl gereinigt wird und verhindert, dass Feuchtigkeit oder Schmutz in den Bereich der Labyrinthdichtung 5 oder in das Innere gelangen können.

Da das Federbeinlager 1 praktisch keinen größeren Bauraum als ein herkömmliches Federbeinlager benötigt, kann es im Rahmen der Wartung oder Reparatur einfach eingebaut werden.

In dem dargestellten Ausführungsbeispiel besteht der Dichtring 8 aus einem Kunststoffmaterial, gegebenenfalls kann sogar eine Normgröße gewählt werden, wodurch sich eine weitere Vereinfachung ergibt.

Bei dem in Fig. 2 dargestellten zweiten Ausführungsbeispiel eines Federbeinlagers werden für identische Komponenten wie in Fig. 1 die gleichen Bezugszeichen verwendet. In Übereinstimmung mit dem ersten Ausführungsbeispiel umfasst das Federbeinlager 9 ein Gehäuseunterteil 10, ein durch eine Labyrinthdichtung 5 geschütztes Axialwälzlager 4 und einen Dichtring 8.

Zusätzlich ist am Innenumfang des Gehäuseunterteils 10 ein radialer Vorsprung 11 angeordnet. Das gegenüberliegende Gehäuseoberteil weist an dieser Stelle einen Absatz 12 auf, zwischen dem Absatz 12 und dem Vorsprung 11 ist ein zweiter Dichtring 13 gehalten, der die Innenseite des Federbeinlagers 9 vor Verschmutzungen schützt.

Die beiden in den Figuren 1 und 2 dargestellten Federbeinlager 1, 9 werden als kompakte, einteilige Einheiten hergestellt, die direkt an ein Federbein montiert werden können.

### Bezugszahlenliste

- 1: Federbeinlager
- 2: Gehäuseunterteil
- 3: Gehäuseoberteil
- 4: Axialwälzlager
- 5: Labyrinthdichtung
- 6: Vorsprung
- 7: Vorsprung
- 8: Dichtring
- 9: Federbeinlager
- 10: Gehäuseunterteil
- 11: Vorsprung
- 12: Absatz
- 13: Dichtring

## Patentansprüche

1. Federbeinlager, mit einem Axialgleitlager oder einem Axialwälzlager, das zwischen einem Gehäuseunterteil und einem Gehäuseoberteil eines Lagergehäuses aufgenommen ist, wenigstens einem eine Trennfuge zwischen dem Gehäuseunterteil und dem Gehäuseoberteil abdichtenden Dichtungselement, wobei das Dichtungselement wenigstens einen die Trennfuge am Innenumfang und/oder am Außenumfang des Lagergehäuses abdichtenden Dichtring (8, 13) aufweist, der bewegbar zwischen dem Gehäuseunterteil (2, 10) und dem Gehäuseoberteil (3) gehalten ist und das Gehäuseunterteil (2, 10) und das Gehäuseoberteil (3) wenigstens einen sich radial erstreckenden Vorsprung (6, 7, 11) aufweisen, **dadurch gekennzeichnet, dass** sich die Vorsprünge (6, 7, 11) des Gehäuseoberteils (3) *und* des Gehäuseunterteils (2, 10) in axialer Richtung gegenüberliegen und der Dichtring (8, 13) axial zwischen den Vorsprüngen (6, 7, 11) beweglich angeordnet ist.

2. Federbeinlager nach einem der vorangehenden Ansprüche, **dadurch gekennzeichnet, dass** der Dichtring (8, 13) aus einem Kunststoffmaterial besteht.

3. Federbeinlager nach einem der vorangehenden Ansprüche, **dadurch gekennzeichnet, dass** ein erster Dichtring (8) am Außenumfang des Lagergehäuses und ein zweiter Dichtring (13) am Innenumfang des Lagergehäuses angeordnet ist.

4. Federbeinlager nach einem der vorangehenden Ansprüche, **dadurch gekennzeichnet, dass** das Gehäuseunterteil (2, 10) und das Gehäuseoberteil (3) durch eine Schnappverbindung miteinander verbunden sind.

5. Federbeinlager nach einem der vorangehenden Ansprüche, **dadurch gekennzeichnet, dass** das Gehäuseunterteil (2, 10) und das Gehäuseoberteil (3) eine das Axialgleitlager oder das Axialwälzlager (4) abdichtende Labyrinthdichtung (5) aufweisen.

## Claims

1. Spring strut bearing, having an axial plain bearing or an axial rolling bearing which is accommodated between a housing lower part and a housing upper part of a bearing housing, having at least one seal element which seals off a parting line between the housing lower part and the housing upper part, wherein the seal element has at least one sealing ring (8, 13) which seals off the parting line at the inner circumference and/or at the outer circumference of the bearing housing, which sealing ring is held in a movable manner between the housing lower part (2, 10) and the housing upper part (3), and the housing lower part (2, 10) and the housing upper part (3) have at least one radially extending projection (6, 7, 11), **characterized in that** the projections (6, 7, 11) of the housing upper part (3) and of the housing lower part (2, 10) are situated opposite one another in the axial direction, and the sealing ring (8, 13) is arranged in a movable manner axially between the projections (6, 7, 11).

2. Spring strut bearing according to Claim 1, **characterized in that** the sealing ring (8, 13) is composed of a plastic material.

3. Spring strut bearing according to one of the preceding claims, **characterized in that** a first sealing ring (8) is arranged on the outer circumference of the bearing housing and a second sealing ring (13) is arranged on the inner circumference of the bearing housing.

4. Spring strut bearing according to one of the preceding claims, **characterized in that** the housing lower part (2, 10) and the housing upper part (3) are connected to one another by a snap-action connection.

5. Spring strut bearing according to one of the preceding claims, **characterized in that** the housing lower part (2, 10) and the housing upper part (3) have a labyrinth seal (5) which seals off the axial plain bearing or the axial rolling bearing (4).

## Revendications

1. Support de jambe de suspension, comprenant un palier lisse axial ou un palier à roulement axial, qui est reçu entre une partie inférieure de boitier et une partie supérieure de boiter d'un boîtier de palier, au moins un élément d'étanchéité étanchant un joint de séparation entre la partie inférieure de boîtier et la partie supérieure de boîtier, l'élément d'étanchéité présentant au moins un bague d'étanchéité (8, 13) étanchant le joint de séparation au niveau de la périphérie intérieure et/ou de la périphérie extérieure du boîtier de palier, laquelle bague d'étanchéité est maintenue mobile entre la partie inférieure de boîtier (2, 10) et la partie supérieure de boîtier (3), et la partie inférieure de boîtier (2, 10) et la partie supérieure de boîtier (3) présentant au moins une saillie (6, 7, 11) s'étendant radialement, **caractérisé en ce que** les saillies (6, 7, 11) de la partie supérieure de boîtier (3) et de la partie inférieure de boitier (2, 10) sont opposées les unes aux autres dans la direction axiale et la bague d'étanchéité (8, 13) est disposée mobile axialement entre les saillies (6, 7, 11).

2. Support de jambe de suspension selon la revendication 1, **caractérisé en ce que** la bague d'étanchéité (8, 13) se compose d'un matériau en plastique.

3. Support de jambe de suspension selon l'une quelconque des revendications précédentes, **caractérisé en ce qu'**une première bague d'étanchéité (8) est disposée sur la périphérie extérieure du boîtier de palier et une deuxième bague d'étanchéité (13) est disposée sur la périphérie intérieure du boîtier de palier.

4. Support de jambe de suspension selon l'une quelconque des revendications précédentes, **caractérisé en ce que** la partie inférieure de boîtier (2, 10) et la partie supérieure de boîtier (3) sont reliées l'une à l'autre par une connexion par encliquetage.

5. Support de jambe de suspension selon l'une quelconque des revendications précédentes, **caractérisé en ce que** la partie inférieure de boîtier (2, 10) et la partie supérieure de boîtier (3) présentent un joint à labyrinthe (5) étanchant le palier lisse axial ou le palier à roulement axial (4) .
